# EUROPÄISCHE PATENTSCHRIFT

(11) **EP 1 242 852 B1**
(45) Veröffentlichungstag und Bekanntmachung des Hinweises auf die Patenterteilung: **20.08.2003**
(21) Anmeldenummer: 00988664.9
(22) Anmeldetag: 29.11.2000
(51) Int. Cl.: G05B 19/042, G05B 19/05

(54) **VORRICHTUNG UND VERFAHREN ZUR EINBINDUNG VON AUTOMATISIERUNGSKOMPONENTEN**
DEVICE AND METHOD FOR LINKING AUTOMATION COMPONENTS
PROCEDE ET DISPOSITIF POUR INTEGRER DES COMPOSANTS D'AUTOMATISATION

(30) Priorität: 08.12.1999 DE 19959245
(43) Veröffentlichungstag der Anmeldung: 25.09.2002
(73) Patentinhaber: SIEMENS AKTIENGESELLSCHAFT, 80333 München (DE)
(72) Erfinder: MACHER, Andreas, 92318 Neumarkt (DE); PÖRTNER-VON DER MARWITZ, Josef, 90427 Nürnberg (DE); GOLLWITZER, Dieter, 92353 Postbauer-Heng (DE); KULZER, Heinrich, 90542 Eckental (DE); LIST, Stefan, 90766 Fürth (DE)
(86) Internationale Anmeldenummer: DE0004249
(87) Internationale Veröffentlichungsnummer: WO01042862

(56) Entgegenhaltungen:
- WO-A-97/11415
- US-A- 5 901 058
- HILDING ELMQVIST: "A UNIFORM ARCHITECTURE FOR DISTRIBUTED AUTOMATION" , ADVANCES IN INSTRUMENTATION AND CONTROL,US,INSTRUMENT SOCIETY OF AMERICA, RESEARCH TRIANGLE PARK, VOL. 46, NR. PART 02, PAGE(S) 1599-1608 XP000347589 ISSN: 1054-0032 das ganze Dokument

## Beschreibung

Die Erfindung ein Automatisierungs- oder Prozessleitsystem mit einem Engineeringsystem und mit mindestens einer Automatisierungskomponente zur Einbindung in das Automatisierungs- oder Prozessleitsystem, ein Verfahren zur Einbindung von Automatisierungskomponenten in ein Engineeringsystem eines Automatisierungs- oder Prozessieitsystem sowie eine Automatisierungskomponente zur Einbindung in ein Engineeringsystem eines Automatisierungs- oder Prozessleitsystems.

Aus WO-A-9711415 der Anmelderin ist ein Automatisierungssystem für das Steuern und Regeln von Maschinen und Anlagen der Kunststoffindustrie bekannt, bei dem die speicherprogrammierbaren Steuerungen elektrische Schaltungseinzelteile nachbildende digitale Technologiebausteine aufweisen, mit denen die gewünschten Steuer- und Regelfunktionen modular realisierbar sind und die über Datenschnittstellen miteinander und mit der Anwenderplattform verbunden sind.

Aus Hilding Elmqvist: A Uniform Architecture For Distributed Automation Advances in Instrumentation and Control, US, Instrument Society of America, Reasearch Triangle Park vol. 46 Part 02, pages 1599-1608 ist eine Architekturstruktur für verteilte Automatisierung bekannt. Hierbei erfolgt mit Hilfe einer objektbasierten Sprache eine für den Endbenutzer vereinfachte Konfigurierung und Instandhaltung von Objekten in der Weise, dass eine Änderung eines "Originals" eines Objekts eine automatische Modifikation aller der Objekte nach sich zieht, wo dass "Original-Objekt" enthalten ist.

Der Erfindung liegt die Aufgabe zugrunde auf einfache Weise eine Einbindung von Automatisierungskomponenten in ein Engineeringsystem und damit insbesondere eine Konfigurierung, Projektierung, Dokumentierung und/oder Diagnostizierung von Baugruppen und/oder Automatisierungskomponenten in einem Automatisierungs- oder Prozessleitsystemsystem ermöglicht.

Diese Aufgabe wird durch ein System, durch ein Verfahren sowie durch eine Automatisierungskomponente mit den in den Ansprüchen 1, 12 bzw. 23 angegebenen Merkmale gelöst.

Vorteilhafte Ausgestaltungen sind in den Unteransprüchen enthalten.

Im folgenden wird die Erfindung anhand der in den Figuren dargestellten Ausführungsbeispiele näher beschrieben und erläutert:

Es zeigen:

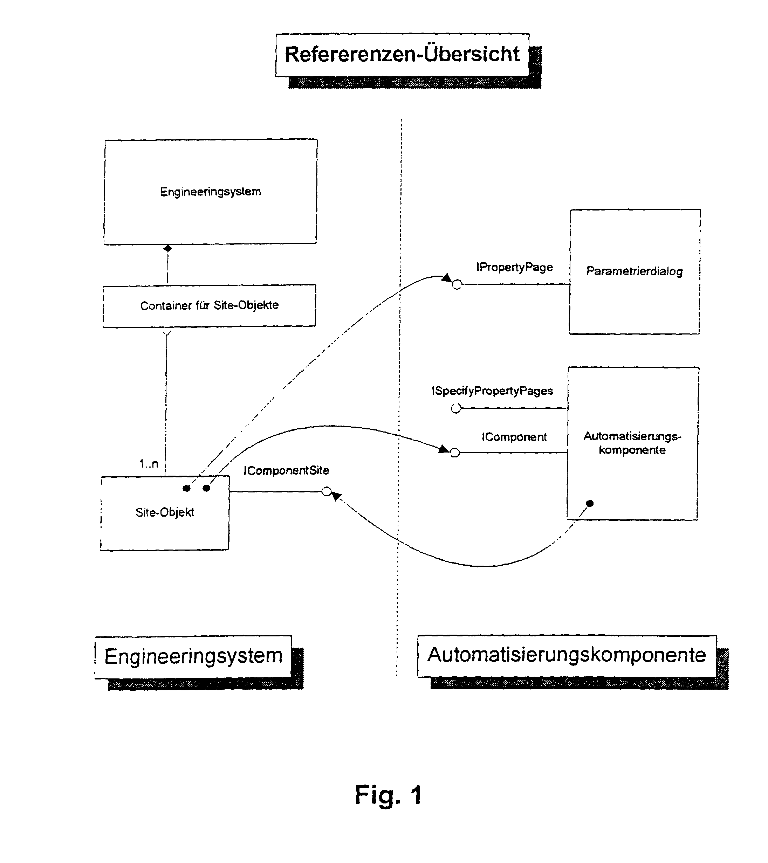

- Fig. 1: ein erstes Beispiel einer Referenzenübersicht zur Einbindung von Automatisierungskomponenten basierend auf definierten Schnittstellen,

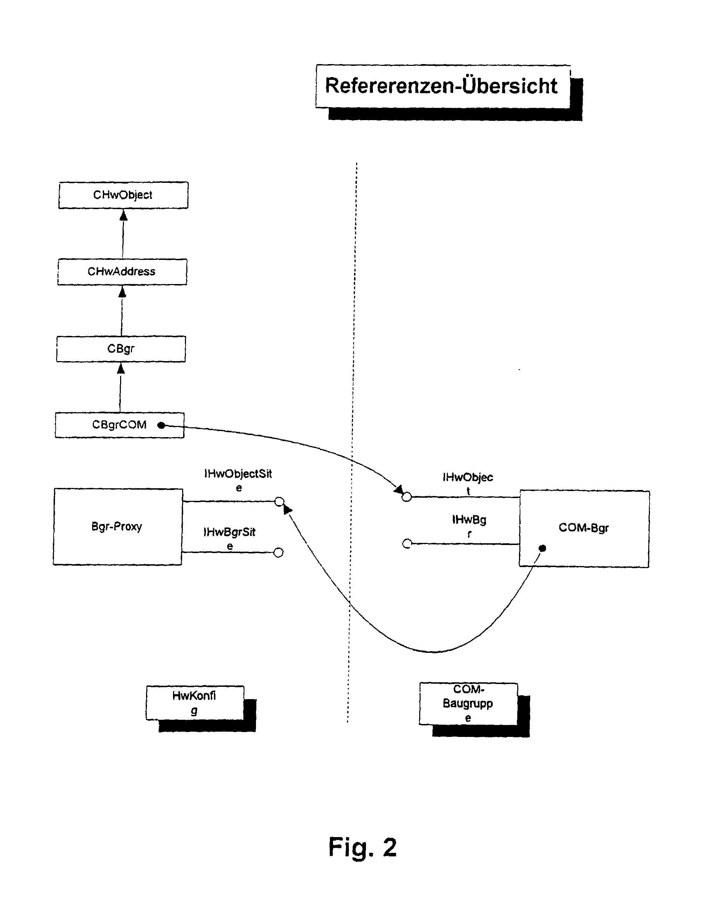

- Fig. 2: ein Beispiel weiteres Beispiel einer Referenzenübersicht zur Einbindung von Automatisierungskomponenten basierend auf definierten Schnittstellen und

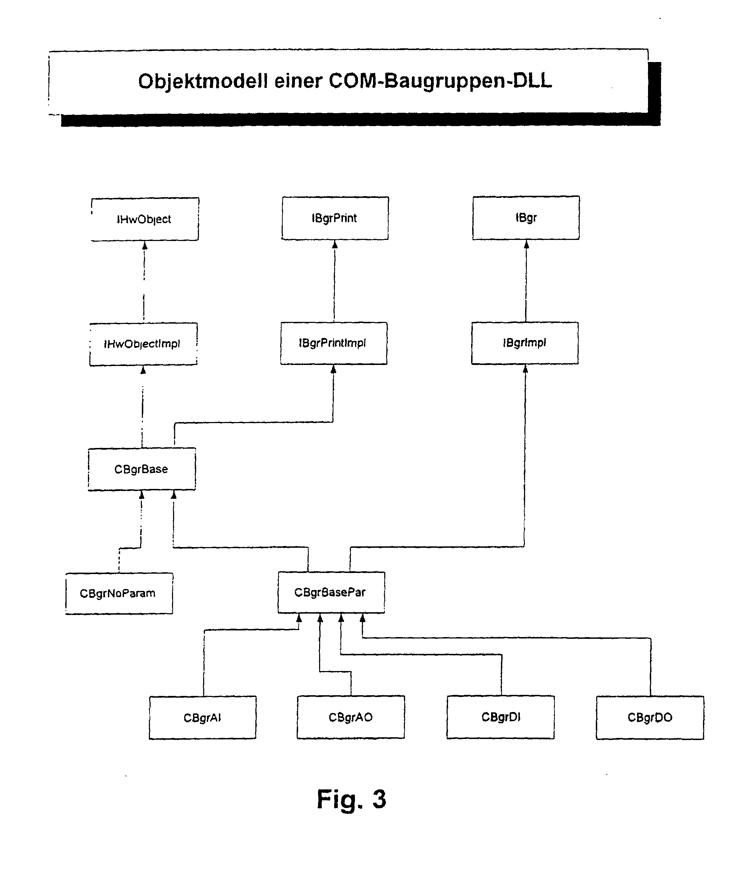

- Fig. 3: ein Beispiel eines Objektmodells einer COM-Baugruppen-DLL.

Die Erfindung basiert auf der Verwendung von versionierten veröffentlichten Interfaces, über welche sich die Softwarekomponente an das Engineeringsystem zur Laufzeit ankoppelt. Über diese Interfaces wird die Komponente dem Engineeringsystem bekannt gegeben und stellt diesem ihre Funktionalität zur Verfügung. Ebenso kann die Softwarekomponenten relevante Informationen des Engineering-Systems über entsprechende Interfaces abfragen.
- zum Erstellungszeitpunkt der Komponente werden keine Dateien (Header-Dateien oder Bibliotheken) des Engineering-Systems benötigt.
- es wird nur die Spezifikation der Interfaces benötigt.
- ebenso wird zum Erstellungszeitpunkt das Vorhandensein des Engineeringsystems nicht vorausgesetzt.
- die Komponente greift auf andere Komponenten oder Informationen des Engineering-Systems mittels festgelegter Schnittstellen zu. Dabei stehen die einzelnen, über Instanziierung der jeweiligen Komponenten erzeugten Objekte über verschiedene Relationen miteinander in Verbindung. Diese Beziehungen sind mittels eines abstrakten Objektmodell definiert. Das Engineeringsystem ermittelt anhand der jeweiligen Relation diejenigen Objekte, welche mit der anfragenden Instanz der Komponente in der angegebenen Relation stehen. Zusätzliche Informationen über Klassenobjekte oder Objektmodelle des Engineering-Systems sind dabei nicht notwendig.
- Die Komponenten legen eigenständig fest, ob für bestimmte Funktionen eigene Sub-Komponenten benutzt, oder entsprechende des Engineering-Systems benutzt werden sollen.

Die Erfindung ermöglicht eine
- vom Engineeringsystem unabhängige Realisierung einer SW - Komponente, die z.B. ein Gerät repräsentiert. Die Komponenten basieren dabei auf Standard-Technologien, wie z.B. dem COM/DCOM-Modell von Microsoft oder dem CORBA-Modell der Object Management Group (OMG), welche den Einsatz der Komponenten sowohl auf dem gleichen Rechner wie das Engineeringsystem, als auch verteilt in einem Rechnernetz erlauben. Ebenso ist der gleichzeitige Einsatz der Komponenten in verschiedenen Engineeringsystemen möglich. Grundlage bildet dabei ein Instanziierungsmodell.
- flexible, komponentenbezogene Realisierung von Projektierungs- und Diagnosefunktionen, da die jeweiligen Informationen komponenten-spezifisch erstellt bzw. interpretiert werden können.
- eine kontextbezogene Interpretation der Informationen durch die jeweilige Komponente. Damit können sowohl einsatz-spezifische Verhalten von Baugruppe gesteuert (wie z.B. der zentrale oder dezentrale Einsatz), als auch sicherheitsorientierte Aspekte (z.B. Zugriff über Autorisierung) einheitlich realisiert werden.

Die Erfindung liegt darin, daß die Einbindung von Automatisierungskomponenten in ein Engineeringsystem nur über eine entsprechende Interface-Spezifikation erfolgt, die auf Basis von COM/DCOM oder CORBA realisiert werden kann.

Zusammenfassend betrifft die Erfindung somit eine Vorrichtung und Verfahren zur Konfigurierung, Projektierung, Dokumentierung und/oder Diagnostizierung von Baugruppen und/oder Automatisierungskomponenten in einem Automatisierungs- oder Prozessleitsystemsystem. Für eine Einbindung von Automatisierungskomponenten in ein Engineeringsystem des Automatisierungs- oder Prozessleitsystemsystems wird vorgeschlagen, daß das Engineeringsystem ein Interface zur Ankopplung an das Engineeringsystem aufweist. Über das Interface koppelt sich die Softwarekomponente an das Engineeringsystem an. Die Automatisierungskomponente wird dem Engineeringsystem bekannt gegeben und stellt diesem ihre Funktionalität zur Verfügung. Ebenso kann die Softwarekomponente relevante Informationen des Engineering-Systems über entsprechende Interfaces abfragen.

## Patentansprüche

1. Automatisierungs- oder Prozessleitsystem mit einem Engineeringsystem und mit mindestens einer Automatisierungskomponente zur Einbindung in das Automatisierungs- oder Prozessleitsystem,
**dadurch gekennzeichnet,**
• **dass** das Engineeringsystem ein Interface aufweist, über das sich die Automatisierungskomponente an das Engineeringsystem ankoppelt und über die die Automatisierungskomponente dem Engineeringsystem bekannt gegeben wird,
• **dass** die Automatisierungskomponente über das Interface dem Engineeringsystem ihre Funktionalität zur Verfügung stellt und
• **dass** das Interface zur Abfrage von relevanten Informationen des Engineeringsystems durch die Automatisierungskomponente vorgesehen ist.

2. System nach Anspruch 1,
**dadurch gekennzeichnet,**
**dass** das Interface ein versioniertes veröffentlichtes Interface ist, über das sich eine Softwarekoaponente an ein Engineeringsystem zur Laufzeit ankoppelt.

3. System nach einem der Ansprüche 1 oder 2,
**dadurch gekennzeichnet,**
**dass** die Automatisierungskomponente auf andere Komponenten oder Informationen des Engineeringsystems mittels festgelegter Schnittstellen zugreift.

4. System nach einem der Ansprüche 1 bis 3,
**dadurch gekennzeichnet,**
**dass** die einzelnen, über Instanziierung der jeweiligen Komponenten erzeugten Objekte über verschiedene Relationen miteinander in Verbindung stehen.

5. System nach einem der Ansprüche 1 bis 4,
**dadurch gekennzeichnet,**
**dass** die Relationen und Beziehungen sind mittels eines abstrakten Objektmodell definiert sind.

6. System nach einem der Ansprüche 1 bis 5,
**dadurch gekennzeichnet,**
**dass** das Engineeringsystem anhand der jeweiligen Relation diejenigen Objekte, welche mit der anfragenden Instanz der Komponente in der angegebenen Relation stehen, ermittelt.

7. System nach einem der Ansprüche 1 bis 6,
**dadurch gekennzeichnet,**
**dass** die Automatisierungskomponenten eigenständig festlegen, ob für bestimmte Funktionen eigene Sub-Komponenten benutzt, oder entsprechende des Engineering-Systems benutzt werden sollen.

8. System nach einem der Ansprüche 1 bis 7,
**dadurch gekennzeichnet,**
**dass** die Komponenten auf Standard-Technologien, wie z.B. dem COM/DCOM-Modell von Microsoft oder dem CORBA-Modell der Object Management Group (OMG) basieren, welche den Einsatz der Komponenten sowohl auf dem gleichen Rechner wie das Engineeringsystem, als auch verteilt in einem Rechnernetz erlauben.

9. System nach einem der Ansprüche 1 bis 8,
**dadurch gekennzeichnet,**
**dass** ein Instanziierungsmodell vorgesehen ist.

10. System nach einem der Ansprüche 1 bis 9,
**dadurch gekennzeichnet,**
**dass** eine kontextbezogene Interpretation der Informationen durch die jeweilige Komponente in der Weise vorgesehen ist, dass sowohl einsatzspezifische Verhalten von Baugruppe gesteuert, insbesondere ein zentraler oder dezentraler Einsatz, und/oder sicherheitsorientierte Aspekte, insbesondere ein Zugriff über Autorisierung einheitlich realisiert werden.

11. System nach einem der Ansprüche 1 bis 10,
**dadurch gekennzeichnet,**
**dass** die Einbindung von Automatisierungskomponenten in das Engineeringsystem nur über eine entsprechende Interface-Spezifikation erfolgt, die insbesondere auf Basis von COM/DCOM oder CORBA realisiert ist.

12. Verfahren zur Einbindung von Automatisierungskomponenten in ein Engineeringsystem eines Automatisierungs- oder Prozessleitsystem,
**dadurch gekennzeichnet,**
• **dass** sich die Automatisierungskomponente an das Engineeringsystem über ein Interface ankoppelt,
• **dass** die Automatisierungskomponente dem Engineeringsystem über das Interface bekannt gegeben wird,
• **dass** die Automatisierungskomponente über das Interface dem Engineeringsystem ihre Funktionalität zur Verfügung stellt und
• **dass** die Automatisierungskomponente über das Interface relevante Informationen des Engineeringsystems abfragt.

13. Verfahren nach Anspruch 12,
**dadurch gekennzeichnet,**
**dass** das Interface ein versioniertes veröffentlichtes Interface ist, über das sich eine Softwarekomponente an ein Engineeringsystem zur Laufzeit ankoppelt.

14. Verfahren nach einem der Ansprüche 12 oder 13,
**dadurch gekennzeichnet,**
**dass** die Komponente auf andere Komponenten oder Informationen des Engineering-Systems mittels festgelegter Schnittstellen zugreift.

15. Verfahren nach einem der Ansprüche 12 bis 14,
**dadurch gekennzeichnet,**
**dass** die einzelnen, über Instanziierung der jeweiligen Komponenten erzeugten Objekte über verschiedene Relationen miteinander in Verbindung stehen.

16. Verfahren nach einem der Ansprüche 12 bis 15,
**dadurch gekennzeichnet,**
**dass** die Relationen und Beziehungen sind mittels eines abstrakten Objektmodell definiert sind.

17. Verfahren nach einem der Ansprüche 12 bis 16,
**dadurch gekennzeichnet,**
**dass** das Engineeringsystem anhand der jeweiligen Relation diejenigen Objekte, welche mit der anfragenden Instanz der Komponente in der angegebenen Relation stehen, ermittelt.

18. Verfahren nach einem der Ansprüche 12 bis 17,
**dadurch gekennzeichnet,**
**dass** die Komponenten eigenständig festlegen, ob für bestimmte Funktionen eigene Sub-Komponenten benutzt, oder entsprechende des Engineering-Systems benutzt werden sollen.

19. Verfahren nach einem der Ansprüche 12 bis 18,
**dadurch gekennzeichnet,**
**dass** die Komponenten auf Standard-Technologien, wie z.B. dem COM/DCOM-Modell von Microsoft oder dem CORBA-Modell der Object Management Group (OMG) basieren, welche den Einsatz der Komponenten sowohl auf dem gleichen Rechner wie das Engineeringsystem, als auch verteilt in einem Rechnernetz erlauben.

20. Verfahren nach einem der Ansprüche 12 bis 19,
**dadurch gekennzeichnet,**
**dass** ein Instanziierungsmodell vorgesehen ist.

21. Verfahren nach einem der Ansprüche 12 bis 20,
**dadurch gekennzeichnet,**
**dass** eine kontextbezogene Interpretation der Informationen durch die jeweilige Komponente in der Weise vorgesehen ist, dass sowohl einsatzspezifische Verhalten von Baugruppe gesteuert, insbesondere ein zentraler oder dezentraler Einsatz, und/oder sicherheitsorientierte Aspekte, insbesondere ein Zugriff über Autorisierung einheitlich realisiert werden.

22. Verfahren nach einem der Ansprüche 12 bis 21,
**dadurch gekennzeichnet,**
**dass** die Einbindung von Automatisierungskomponenten in das Engineeringsystem über eine entsprechende Interface-Spezifikation erfolgt, die insbesondere auf Basis von COM/DCOM oder CORBA realisiert ist.

23. Automatisierungskomponente zur Einbindung in ein Engineeringsystem eines Automatisierungs- oder Prozessleitsystems,
**dadurch gekennzeichnet,**
• **dass** die Automatisierungskomponente ein Interface zur Ankopplung an das Engineeringsystem aufweist, wobei die Automatisierungskomponente dem Engineeringsystem über das Interface bekannt gegeben wird,
• **dass** die Automatisierungskomponente über das Interface dem Engineeringsystem ihre Funktionalität zur Verfügung stellt und
• **dass** das Interface zur Abfrage von relevanten Informationen des Engineeringsystems durch die Automatisierungskomponente vorgesehen ist.

24. Automatisierungskomponente nach Anspruch 23,
**dadurch gekennzeichnet,**
**dass** das Interface ein versioniertes veröffentlichtes Interface ist, über das sich eine Softwarekomponente an ein Engineeringsystem zur Laufzeit ankoppelt.

25. Automatisierungskomponente nach einem der Ansprüche 23 oder 24,
**dadurch gekennzeichnet,**
**dass** die Automatisierungskomponente auf andere Komponenten oder Informationen des Engineeringsystems mittels festgelegter Schnittstellen zugreift.

26. Automatisierungskomponente nach einem der Ansprüche 23 bis 25,
**dadurch gekennzeichnet,**
**dass** die einzelnen, über Instanziierung der jeweiligen Komponenten erzeugten Objekte über verschiedene Relationen miteinander in Verbindung stehen.

27. Automatisierungskomponente nach einem der Ansprüche 23 bis 26,
**dadurch gekennzeichnet,**
**dass** die Relationen und Beziehungen mittels eines abstrakten Objektmodells definiert sind.

28. Automatisierungskomponente nach einem der Ansprüche 23 bis 27,
**dadurch gekennzeichnet,**
**dass** die Automatisierungskomponenten eigenständig festlegen, ob für bestimmte Funktionen eigene Sub-Komponenten benutzt, oder entsprechende des Engineering-Systems benutzt werden sollen.

29. Automatisierungskomponente nach einem der Ansprüche 23 bis 27,
**dadurch gekennzeichnet,**
**dass** die Komponenten auf Standard-Technologien, wie z.B. dem COM/DCOM-Modell von Microsoft oder dem CORBA-Modell der Object Management Group (OMG) basieren, welche den Einsatz der Komponenten sowohl auf dem gleichen Rechner wie das Engineeringsystem, als auch verteilt in einem Rechnernetz erlauben.

30. Automatisierungskomponente nach einem der Ansprüche 23 bis 29,
**dadurch gekennzeichnet,**
**dass** ein Instanziierungsmodell vorgesehen ist.

31. Automatisierungskomponente nach einem der Ansprüche 23 bis 30,
**dadurch gekennzeichnet,**
**dass** eine kontextbezogene Interpretation der Informationen durch die jeweilige Komponente in der Weise vorgesehen ist, dass sowohl einsatz-spezifische Verhalten von Baugruppe gesteuert, insbesondere ein zentraler oder dezentraler Einsatz, und/oder sicherheitsorientierte Aspekte, insbesondere ein Zugriff über Autorisierung einheitlich realisiert werden.

32. Automatisierungskomponente nach einem der Ansprüche 23 bis 31,
**dadurch gekennzeichnet,**
**dass** die Einbindung von Automatisierungskomponenten in das Engineeringsystem über eine entsprechende Interface-Spezifikation erfolgt, die insbesondere auf Basis von COM/DCOM oder CORBA realisiert ist.

## Claims

1. Automation or process control system with an engineering system and with at least one automation component for integration into the automation system or process control system, **characterised in that**
• the engineering system has an interface via which the automation component couples to the engineering system and via which the engineering system is informed of the automation component,
• the automation component provides its functionality to the engineering system via the interface, and
• the interface is provided for interrogating relevant information of the engineering system by means of the automation component.

2. System according to Claim 1, **characterised in that** the interface is a versioned, public interface, via which a software component couples to an engineering system for the running time.

3. System according to one of Claims 1 or 2, **characterised in that** the automation component accesses other components or information of the engineering system by means of defined interfaces.

4. System according to one of Claims 1 to 3, **characterised in that** the individual objects which are generated by means of instantiation of the respective components are connected to one another via various relations.

5. System according to one of Claims 1 to 4, **characterised in that** the relations and relationships are defined by means of an abstract object model.

6. System according to one of Claims 1 to 5, **characterised in that**, by reference to the respective relation, the engineering system determines those objects which have the stated relation with the inquiring entity of the component.

7. System according to one of Claims 1 to 6, **characterised in that** the automation components independently determine whether separate subcomponents are to be used for specific functions or corresponding subcomponents of the engineering system are to be used.

8. System according to one of Claims 1 to 7, **characterised in that** the components are based on standard technologies, for example the COM/DCOM model of Microsoft or the CORBA model of the Object Management Group (OMG), which permit the components to be used both on the same computer as the engineering system and also distributed in a computer network.

9. System according to one of Claims 1 to 8, **characterised in that** an instantiation model is provided.

10. System according to one of Claims 1 to 9, **characterised in that** a context-related interpretation of the information by the respective component is provided in such a way that both use-specific behaviour of a module is controlled, in particular a central or decentralised use, and/or security-oriented aspects, in particular an access via authorisation, are implemented uniformly.

11. System according to one of Claims 1 to 10, **characterised in that** the integration of automation components into the engineering system takes place only via a corresponding interface specification which is implemented in particular on the basis of COM/DCOM or CORBA.

12. Method for integration of automation components into an engineering system of an automation system or process control system, **characterised in that**
• the automation system is coupled to the engineering system via an interface,
• the engineering system is informed of the automation component via the interface,
• the automation component provides its functionality to the engineering system via the interface, and
• the automation component interrogates relevant information of the engineering system via the interface.

13. Method according to Claim 12, **characterised in that** the interface is a versioned, public interface, via which a software component couples to an engineering system for the running time.

14. Method according to one of Claims 12 or 13, **characterised in that** the component accesses other components or information of the engineering system by means of defined interfaces.

15. Method according to one of Claims 12 to 14, **characterised in that** the individual objects which are generated by means of instantiation of the respective components are connected to one another via various relations.

16. Method according to one of Claims 12 to 15, **characterised in that** the relations and relationships are defined by means of an abstract object model.

17. Method according to one of Claims 12 to 16, **characterised in that**, by reference to the respective relation, the engineering system determines those objects which have the stated relation with the inquiring entity of the component.

18. Method according to one of Claims 12 to 17, **characterised in that** the components independently determine whether separate subcomponents are to be used for specific functions or corresponding subcomponents of the engineering system are to be used.

19. Method according to one of Claims 12 to 18, **characterised in that** the components are based on standard technologies, for example the COM/DCOM model of Microsoft or the CORBA model of the Object Management Group (OMG) which permit the components to be used both on the same computer as the engineering system and also distributed in a computer network.

20. Method according to one of Claims 12 to 19, **characterised in that** an instantiation model is provided.

21. Method according to one of Claims 12 to 20, **characterised in that** a context-related interpretation of the information by the respective component is provided in such a way that both use-specific behaviour of a module is controlled, in particular a central or decentralised use, and/or security-oriented aspects, in particular an access via authorisation, are implemented uniformly.

22. Method according to one of Claims 12 to 21, **characterised in that** the integration of automation components into the engineering system takes place via a corresponding interface specification which is implemented in particular on the basis of COM/DCOM or CORBA.

23. Automation component for integration into an engineering system of an automation system or process control system, **characterised in that**
• the automation component has an interface for coupling to the engineering system, the engineering system being informed of the automation component via the interface,
• the automation component provides its functionality to the engineering system via the interface, and
• the interface is provided for interrogating relevant information of the engineering system by means of the automation component.

24. Automation component according to Claim 23, **characterised in that** the interface is a versioned, public interface, via which a software component couples to an engineering system for the running time.

25. Automation component according to one of Claims 23 or 24, **characterised in that** the automation component accesses other components or information of the engineering system by means of defined interfaces.

26. Automation component according to one of Claims 23 to 25, **characterised in that** the individual objects which are generated by means of instantiation of the respective components are connected to one another via various relations.

27. Automation component according to one of Claims 23 to 26, **characterised in that** the relations and relationships are defined by means of an abstract object model.

28. Automation component according to one of Claims 23 to 27, **characterised in that** the automation components independently determine whether separate subcomponents are to be used for specific functions or corresponding subcomponents of the engineering system are to be used.

29. Automation component according to one of Claims 23 to 27, **characterised in that** the components are based on standard technologies, for example the COM/DCOM model of Microsoft or the CORBA model of the Object Management Group (OMG) which permit the components to be used both on the same computer as the engineering system and also distributed in a computer network.

30. Automation component according to one of Claims 23 to 29, **characterised in that** an instantiation model is provided.

31. Automation component according to one of Claims 23 to 30, **characterised in that** a context-related interpretation of the information by the respective component is provided in such a way that both use-specific behaviour of a module is controlled, in particular a central or decentralised use, and/or security-oriented aspects, in particular an access via authorisation, are implemented uniformly.

32. Automation component according to one of Claims 23 to 31, **characterised in that** the integration of automation components into the engineering system takes place via a corresponding interface specification which is implemented in particular on the basis of COM/DCOM or CORBA.

## Revendications

1. Système d'automatisation et de gestion de processus avec un système d'ingénierie et avec au moins un composant d'automatisation pour l'intégration dans le système d'automatisation ou de gestion de processus,
**caractérisé par le fait que**
• le système d'ingénierie comporte une interface par l'intermédiaire de laquelle le composant d'automatisation se couple au système d'ingénierie et par l'intermédiaire de laquelle le composant d'automatisation est porté à la connaissance du système d'ingénierie,
• par l'intermédiaire de l'interface, le composant d'automatisation met sa fonctionnalité à la disposition du système d'ingénierie et
• l'interface est prévue pour la demande d'informations déterminantes du système d'ingénierie au moyen du composant d'automatisation.

2. Système selon la revendication 1,
**caractérisé par le fait que** l'interface est une interface publique à plusieurs versions par l'intermédiaire de laquelle un composant logiciel est couplé à un système d'ingénierie pour l'exécution.

3. Système selon l'une des revendications 1 ou 2,
**caractérisé par le fait que** le composant d'automatisation accède à d'autres composants ou informations du système d'ingénierie au moyen d'interfaces spécifiées.

4. Système selon l'une des revendications 1 à 3,
**caractérisé par le fait que** les différents objets produits par instanciation du composant respectif sont reliés entre eux par l'intermédiaire de différentes relations.

5. Système selon l'une des revendications 1 à 4,
**caractérisé par le fait que** les relations sont définies au moyen d'un modèle d'objet abstrait.

6. Système selon l'une des revendications 1 à 5,
**caractérisé par le fait que** le système d'ingénierie détermine à l'aide de la relation respective les objets qui sont dans la relation indiquée avec l'instance demandeuse du composant.

7. Système selon l'une des revendications 1 à 6,
**caractérisé par le fait que** les composants d'automatisation spécifient de manière indépendante s'il faut utiliser pour certaines fonctions des sous-composants particuliers ou des composants correspondants du système d'ingénierie.

8. Système selon l'une des revendications 1 à 7,
**caractérisé par le fait que** les composants sont basés sur des technologies standards, par exemple le modèle COM/DCOM de Microsoft ou le modèle CORBA de l'abject Management Group (OMG), qui permettent l'utilisation des composants aussi bien sur le même ordinateur que le système d'ingénierie que de manière répartie dans un réseau d'ordinateurs.

9. Système selon l'une des revendications 1 à 8,
**caractérisé par le fait qu'**un modèle d'instanciation est prévu.

10. Système selon l'une des revendications 1 à 9,
**caractérisé par le fait qu'**il est prévu une interprétation des informations par rapport au contexte au moyen du composant respectif, de manière aussi bien à commander des comportements spécifiques à l'utilisation pour les modules (par exemple utilisation centrale ou décentralisée) qu'à réaliser uniformément des aspects de sécurité (par exemple accès via une autorisation).

11. Système selon l'une des revendications 1 à 10,
**caractérisé par le fait que** l'intégration de composants d'automatisation dans le système d'ingénierie s'effectue seulement par l'intermédiaire d'une spécification d'interface correspondante qui est réalisée notamment sur la base de COM/DCOM ou de CORBA.

12. Procédé pour l'intégration de composants d'automatisation dans un système d'ingénierie d'un système d'automatisation ou de gestion de processus,
**caractérisé par le fait que**
• le composant d'automatisation se couple au système d'ingénierie par l'intermédiaire d'une interface,
• le composant d'automatisation est porté à la connaissance du système d'ingénierie par l'intermédiaire de l'interface,
• par l'intermédiaire de l'interface, le composant d'automatisation met sa fonctionnalité à la disposition du système d'ingénierie et
• par l'intermédiaire de l'interface, le composant d'automatisation demande des informations déterminantes du système d'ingénierie.

13. Procédé selon la revendication 12,
**caractérisé par le fait que** l'interface est une interface publique à plusieurs versions par l'intermédiaire de laquelle un composant logiciel est couplé à un système d'ingénierie pour l'exécution.

14. Procédé selon l'une des revendications 12 ou 13,
**caractérisé par le fait que** le composant accède à d'autres composants ou informations du système d'ingénierie au moyen d'interfaces spécifiées.

15. Procédé selon l'une des revendications 12 à 14,
**caractérisé par le fait que** les différents objets produits par instanciation du composant respectif sont reliés entre eux par l'intermédiaire de différentes relations.

16. Procédé selon l'une des revendications 12 à 15,
**caractérisé par le fait que** les relations sont définies au moyen d'un modèle d'objet abstrait.

17. Procédé selon l'une des revendications 12 à 16,
**caractérisé par le fait que** le système d'ingénierie détermine à l'aide de la relation respective les objets qui sont dans la relation indiquée avec l'instance demandeuse du composant.

18. Procédé selon l'une des revendications 12 à 17,
**caractérisé par le fait que** les composants spécifient de manière indépendante s'il faut utiliser pour certaines fonctions des sous-composants particuliers ou des composants correspondants du système d'ingénierie.

19. Procédé selon l'une des revendications 12 à 18,
**caractérisé par le fait que** les composants sont basés sur des technologies standards, par exemple le modèle COM/DCOM de Microsoft ou le modèle CORBA de l'Object Management Group (OMG), qui permettent l'utilisation des composants aussi bien sur le même ordinateur que le système d'ingénierie que de manière répartie dans un réseau d'ordinateurs.

20. Procédé selon l'une des revendications 12 à 19,
**caractérisé par le fait qu'**un modèle d'instanciation est prévu.

21. Procédé selon l'une des revendications 12 à 20,
**caractérisé par le fait qu'**il est prévu une interprétation des informations par rapport au contexte au moyen du composant respectif, de manière aussi bien à commander des comportements spécifiques à l'utilisation pour les modules, notamment une utilisation centrale ou décentralisée, qu'à réaliser uniformément des aspects de sécurité, notamment un accès via une autorisation.

22. Procédé selon l'une des revendications 12 à 21,
**caractérisé par le fait que** l'intégration de composants d'automatisation dans le système d'ingénierie s'effectue par l'intermédiaire d'une spécification d'interface correspondante qui est réalisée notamment sur la base de COM/DCOM ou de CORBA.

23. Composant d'automatisation pour l'intégration dans un système d'ingénierie d'un système d'automatisation ou de gestion de processus,
**caractérisé par le fait que**
• le composant d'automatisation comporte une interface pour le couplage au système d'ingénierie, le composant d'automatisation étant porté à la connaissance du système d'ingénierie par l'intermédiaire de l'interface,
• par l'intermédiaire de l'interface, le composant d'automatisation met sa fonctionnalité à la disposition du système d'ingénierie et
• par l'intermédiaire de l'interface, le composant d'automatisation demande des informations déterminantes du système d'ingénierie.

24. Composant d'automatisation selon la revendication 23,
**caractérisé par le fait que** l'interface est une interface publique à plusieurs versions par l'intermédiaire de laquelle un composant logiciel est couplé à un système d'ingénierie pour l'exécution.

25. Composant d'automatisation selon l'une des revendications 23 ou 24,
**caractérisé par le fait que** le composant d'automatisation accède à d'autres composants ou informations du système d'ingénierie au moyen d'interfaces spécifiées.

26. Composant d'automatisation selon l'une des revendications 23 à 25,
**caractérisé par le fait que** les différents objets produits par instanciation du composant respectif sont reliés entre eux par l'intermédiaire de différentes relations.

27. Composant d'automatisation selon l'une des revendications 23 à 26,
**caractérisé par le fait que** les relations sont définies au moyen d'un modèle d'objet abstrait.

28. Composant d'automatisation selon l'une des revendications 23 à 27,
**caractérisé par le fait que** les composants spécifient de manière indépendante s'il faut utiliser pour certaines fonctions des sous-composants particuliers ou des composants correspondants du système d'ingénierie.

29. Composant d'automatisation selon l'une des revendications 23 à 27,
**caractérisé par le fait que** les composants sont basés sur des technologies standards, par exemple le modèle COM/DCOM de Microsoft ou le modèle CORBA de l'Object Management Group (OMG), qui permettent l'utilisation des composants aussi bien sur le même ordinateur que le système d'ingénierie que de manière répartie dans un réseau d'ordinateurs.

30. Composant d'automatisation selon l'une des revendications 23 à 29,
**caractérisé par le fait qu'**un modèle d'instanciation est prévu.

31. Composant d'automatisation selon l'une des revendications 23 à 30,
**caractérisé par le fait qu'**il est prévu une interprétation des informations par rapport au contexte au moyen du composant respectif, de manière aussi bien à commander des comportements spécifiques à l'utilisation pour les modules, notamment une utilisation centrale ou décentralisée, qu'à réaliser uniformément des aspects de sécurité, notamment un accès via une autorisation.

32. Système selon l'une des revendications 23 à 31,
**caractérisé par le fait que** l'intégration de composants d'automatisation dans le système d'ingénierie s'effectue seulement par l'intermédiaire d'une spécification d'interface correspondante qui est réalisée notamment sur la base de COM/DCOM ou de CORBA.
